(19)

Europäisches
Patentamt
European
Patent Office
Office européen
des brevets

(11)　**EP 3 944 029 A1**

(12)　# EUROPEAN PATENT APPLICATION

(43) Date of publication:
**26.01.2022   Bulletin 2022/04**

(21) Application number: **20186916.1**

(22) Date of filing: **21.07.2020**

(51) International Patent Classification (IPC):
**G05B 13/02** $^{(2006.01)}$　　**G06N 3/04** $^{(2006.01)}$

(52) Cooperative Patent Classification (CPC):
**G05B 13/0265; G06N 3/0454;** G05B 2219/35588

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Lavrik, Vladimir
63303 Dreieich (DE)**
• **Meng, Yang Qiao
Beijing, P.R.China, 100102 (CN)**

(54)　**METHOD AND SYSTEM FOR DETERMINING A COMPRESSION RATE FOR AN AI MODEL OF AN INDUSTRIAL TASK**

(57)　The invention regards a recommendation system and a method for determining a compression rate r* for an AI model of an industrial task (Task 1, ..., k; Task k+1, ..., k+n) according to a set of requirements for the runtime properties of the AI model, wherein, for the AI model, the original number of parameters (n) is reduced to a reduced number of parameters (n*). In a first stage each AI model is compressed with a number of different compression rates $r_i$, wherein each of the compressed AI models is executed in an execution environment and as first results during the executions the runtime properties are recorded, and wherein an optimal compression rate r* for each of the AI models is calculated by an analytical analysis of the first results and stored in a database or similar system. In a second stage the data from the database is used to train an additional machine learning model. In a third stage for a new AI model of a new task (Task k+1, ..., k+n) a new set of desired runtime properties is defined and the additional machine learning model is employed for determining the optimal compression rate r* for that new AI model in respect to the desired runtime properties.

FIG 1

## Description

The invention regards a method determining a compression rate for an AI model of an industrial task according to claim 1, a system according to claim 11, and a computer program product according to claim 12.

The conception of industrial internet of things together with revolutionary analytical techniques based on AI can be described by following sentences: Given a production site, a customer or an automation manufacturer installs industrial equipment with a possibility to collect the different kind of data with a usage of different sensors. Collected data are transmitted via either wired or wireless connections for further analysis. The analysis of the data is performed with a usage of either classical approaches or AI methods. The data analysis can be conducted either on the Cloud or onsite with a deployed model (AI model) on so called edge devices or on other computing devices. Based on the results of data analysis the customer or the automation manufacturer itself can perform optimization of business/production processes in order to decrease the cost of a production, electricity consumption, resources usage and as a result to decrease an overall contribution to a global climate change.

AI models are executed on industrial edge devices, industrial controllers (e.g. PLC - programmable logic controllers) or even on cloud-based computing entities - so called "web services" or "cloud hosting".

The challenge is, that the more accurate an AI model works, the more resources (memory space, computation time, etc.) it needs. On the other hand, in existing environments computation power ("CPU time") is limited. Moreover, in most cases the response of an AI model is due within a limited timeframe, so the maximum response time or "inference time" is limited. AI models can be compressed, e.g. in reducing their parameters, for speeding up and reducing memory allocation or other resource consumption. However, this compression reduces the accuracy of AI models' predictions.

One approach how to perform optimizations as indicated above is, together with a proper AI model, find a way how to optimize this AI model in order to deploy it on the edge device or another execution environment like an industrial controller, so that it will be ran as accurate and efficient as possible, aiming to decrease a computational effort and to decrease an overall power consumption.

Accordingly, it is a task for the present invention to propose a method and a recommendation system for choosing of an optimal compression rate of an AI model which shall be deployed in industrial environment.

The solution of this task considers the industrial environment requirements, hardware resources of the edge device (or other execution environment) itself and the requirements specified to AI model in the analytical project ("industrial task") description.

When selecting a compression rate for AI model, we are facing a tradeoff such that higher compression rate would save more memory space and improve predicting speed but suffer a larger decrease of AI model accuracy. Similarly, a lower compression rate would have the opposite effect. The core of this invention is applying mathematical methodology from the area of operation research to tackle this tradeoff. It provides a compression rate which maximizes AI model prediction accuracy while satisfies both the limit of space memory and requirement of predicting speed (inference time). Of course, other criteria or "features" like deployment time etc. might also be part of the optimization problem.

The solution of this optimization problem is defined in the independent patent claims.

The problem is solved with a method for determining a compression rate for an AI model of an industrial task according to a set of requirements for the runtime properties of the AI model, wherein, for the AI model, the original number of parameters is reduced to a reduced number of parameters. In a first stage of the method, for a number of different AI models for a number of industrial tasks for each of the industrial tasks a number of different compression rates for the assigned AI model is determined. After that, in a first step each AI model is compressed multiple times with that number of different compression rates. In a second step, each of the compressed AI models is executed in an execution environment, whereby as first results during the execution of each of the AI models the runtime properties are recorded, and wherein in a third step an optimal compression rate for each of the AI models is calculated by an analytical analysis of the first results, whereby the optimal compression rate for each industrial task together with a description of the industrial task is stored in a database or similar storage technology. In a second stage of the method, the data from the database is used to train an additional machine learning model, the additional machine learning model having feature information about each of the industrial tasks as input and the calculated optimal compression rate as output, and in a third stage for a new AI model of a new industrial task a new set of desired runtime properties is defined and the additional machine learning model is executed and employed for determining the optimal compression rate for that new AI model in respect to the desired runtime properties. The new AI model is then compressed according to that optimal compression rate and executed for fulfilling the new industrial task. Using this method, the AI model runs with the best possible accuracy while meeting the requirements of inference time and not exceeding allowed or given computing resources and requirements.

The problem is also solved by a system for determining a compression rate for an AI model of an industrial task according to a set of requirements for the runtime properties of the AI model, wherein, for the AI model, the original number of parameters is reduced to a reduced number of parameters. The system comprises a first computer system set up for conducting the steps of the first stage of the method described before and for controlling the execution environment while execution of the compressed AI models. The system further comprises a second computer system set up for performing the method steps of the second and third stage of the method as described before, and a communication channel connecting the first and the second computer system. This system can achieve the advantages as described in connection with the inventive method.

Advantageous embodiments of the invention are disclosed in the dependent method claims. The features of these embodiments and their advantages do also apply to the inventive system in an analogous way. The features of various embodiments might be combined.

In one embodiment, in the first step for every compression rate a compressed AI model is created and executed. The various compression rates might cover a wide range of compression but being distinct in small steps for having an accurate basis for the analytical analysis in the third step.

In most cases it might be appropriate to use at least memory consumption and inference time of the executed AI model as runtime properties. The requirement of maximum inference time is, in most cases, given by a use case of the industrial task, and the memory consumption is, in most cases, just dependent of the given execution environment (computing device). Accordingly, for a system engineer it will be easy to provide these properties parameters.

In one important embodiment, in the third step the optimal compression rate is the compression rate with the best inference accuracy which still fits the requirements for the runtime properties. That leads to a system in which given computing capacities are employed to a maximum.

In the third step, for each AI task linear or non-linear functions are fitted through the recorded runtime properties. Such can be done by known software and does not require user input. The linear or non-linear functions might comprise interpolation, e.g. linear interpolation or spline interpolation, but not limited by these.

In the second and third stage, the feature information for each of the industrial tasks at least comprises: information of memory allocation limit, inference time limit for the compressed model, an original AI model size of the uncompressed AI model, and type of the compression algorithm used for that specific task.

It is advantageous to use an industrial edge device for execution of the AI model because edge devices provide computational power to industrial shop floors and thus unburdens the controllers (PLC - programmable logic controllers) from time consuming computations, i.e. running the AI model. In other cases, it can be a different device at hand, in particular a neural processing unit (a so-called technology module for neural processing) which might be part of an industrial controller.

In one embodiment the executions of the AI task in stage one can be done at different platforms (execution environments), returning the optimal compression rate for each of these environments. In other cases, for reducing the number of "test"-executions in stage one, it is possible to use empiric resource employment factors. That means, that once the runtime properties on a first type of platform have been determined, the runtime properties of the same AI task with the same compression rate but on a different platform (execution environment) can be estimated by use of an empiric factor.

Another advantageous embodiment uses an emulation device for conduction the test series of stage one. That means, for example, that a PLC or a neural processing unit or another type of execution environment can be simulated ("emulated") with a standard hardware, e.g. a personal computer or a virtual machine.

In some embodiments the "target" in stage one is a cloud computing service (CCS). Cloud computing services can deliver virtual unlimited computing resources, particularly in cases in which a limited number of parameters need to be exchanged between a local entity (like a PLC) and the cloud computing service, the latter executing the AI model.

An example of the method is explained by means of the drawings. The same is for explanation of an inventive system and an inventive computer program product for executing the method.

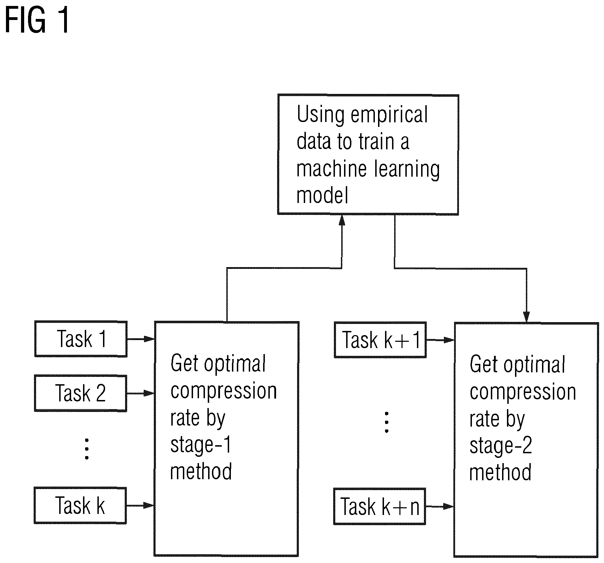

Figure 1 shows a schematic view on the proposed method. The method consists of three stages. Stage 1 aims to run an algorithm shown on the left-hand side of Figure 1 and obtaining an optimal compression rate $r^*$ for every AI task (Task 1, 2, ... k). At stage 2 - shown in the middle - having information on AI tasks and their optimal compression rate $r^*$ we train a machine learning model in order to generalize over tasks and their corresponding optimal compression rates $r^*$ (upper box in the picture). Having a trained machine learning model, in the third stage (shown on the right-hand side) for every new AI task (Task k+1, k+2, ... k+n) we can output an optimal compression rate $r^*$ without running an algorithm of stage 1 for the new AI tasks (Task k+1, k+2, ... k+n) .

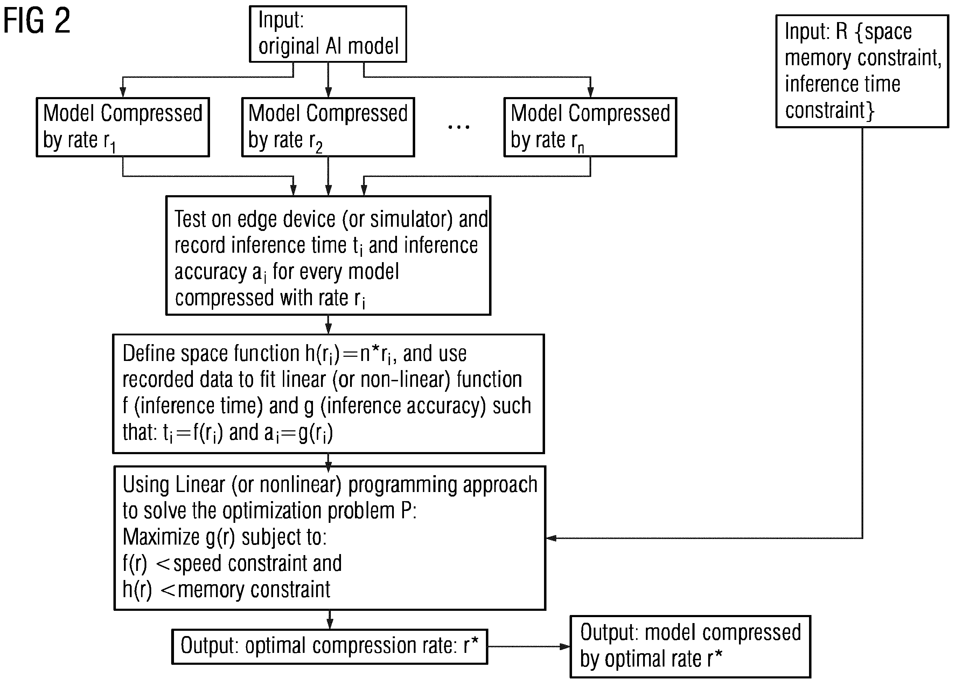

Figure 2 shows a schematic view on an algorithm used at stage 1 of our method. Having as input an original AI model and AI task runtime requirements R ("constraints"), we formulate an optimization problem aiming to maximize an accuracy of compressed AI model a with respect to AI task constraints and output an optimal compression rate $r^*$ of the AI model.

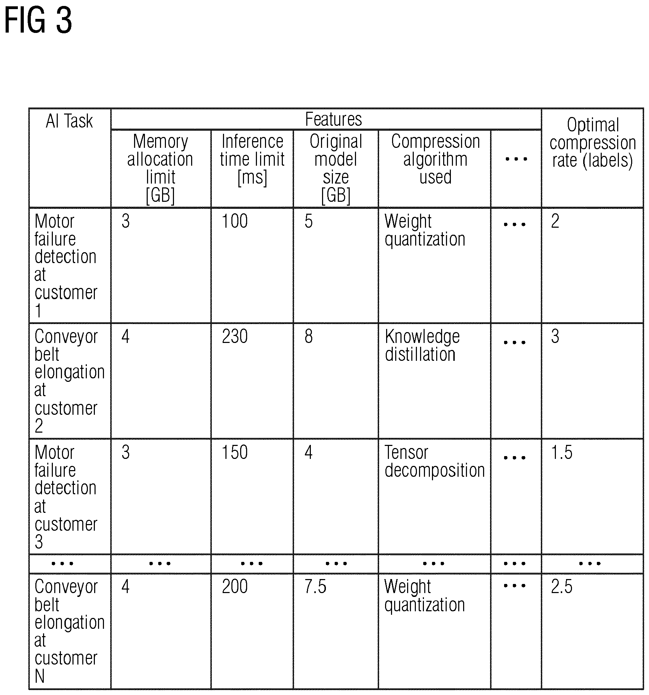

Figure 3 shows a database (table) generated during the execution of stage 1 of the method. Having information on AI tasks and their compression rates $r^*$ as output from stage 1, we formulate a machine learning problem where every AI task with its constraints we associate its compression rate $r^*$ in order to train any suitable machine learning model. One can use a trained machine learning model in order to obtain an optimal compression rate $r^*$ without again running an algorithm of stage 1 as shown in Figure 2 every time for a new, but similar AI task. The columns with the headline "Features" show some of the requirements R which have been met in the execution of the AI model for the various AI tasks. Such requirements (Features) can be, together with the description of a new AI task, serve as an input when asking the trained machine learning model about the optimal compression rate r* for an AI model of that new AI task. Please note that for the sake of conciseness the table of Figure 3 is limited to a small number of parameters (features, requirements); real systems might employ more different requirements, parameters, AI tasks etc.

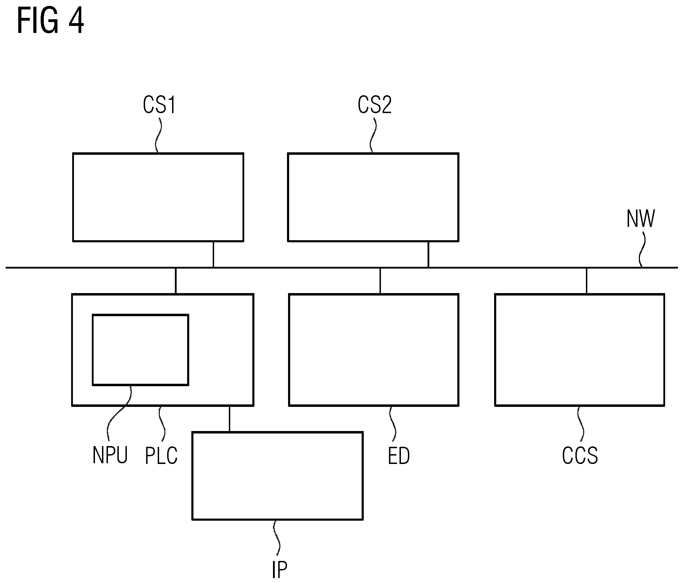

Figure 4 shows a schematic of a system for executing the method. The system comprises various execution environments like a cloud computing service CCS, an industrial edge device ED, or a Neural Processing Unit NPU of a programmable logic controller PLC. The various execution environments are connected - via a communication channel (the network NW) - to computer systems CS1, CS2 which run stage 1 and stages 2 and 3, respectively, of the method. In an embodiment, all stages can be realized by the same computer system CS1 or CS2, but might be realized with different software modules. The programmable logic controller PLC is connected - e.g. by means of a fieldbus system - to an industrial process IP which comprises an industrial task. The programmable logic controller PLC controls the industrial task and thereby frequently employs the AI model which is executed on the Neural Processing Unit NPU or on another execution environment. For example, the PLC might supervise the "health status" of an electrical machine and periodically feeds status information (vibration data, temperature data, electrical parameters) to the AI model which returns with a health status information (o.k.; critical; defective).

In the example, we start our approach with a definition of an AI model compression rate $r_i$. The model compression rate $r_i$ is defined as follows: having initial AI model M with a number of parameters n, we find a compressed AI model M* with a number of parameters n* so that the compression rate r can be described by parameter r in such a way that

$$r(M, M^*) = \frac{n}{n^*}.$$

If in our initially chosen model M we have 100 parameters and we are able to find a compressed model M* with a compression rate of 2, it means that after a model compression we have 50 parameters and therefore we need less computational effort and less memory space in order to run the compressed model.

Our proposed method consists three stages - see Figure 1. In stage 1, when we do not have much empirical data, we apply operation research technique to find the optimal rate. In stage 2, for which we have collected large amount of data in different tasks, we train a machine learning model and later (stage three) we use this machine learning model to get the optimal compression rate r*.

The algorithm and method steps of stage 1 are shown schematically in Figure 2. The algorithm of stage 1 is a method to choose for an optimal compression rate r* of AI model with respect to analytical project requirements, maximizing AI model accuracy and can be described as follows:
Input of the method steps of stage 1:

Initially chosen trained model M with number of parameters n; set of compression rates S;
set of Analytical project deployment requirements R (memory allocation limit, inference time limit, etc.).

Output of the method steps of stage 1:
the optimal compression rate r* with respect to R, leading to the optimal compressed model M*.

A pseudocode of these steps can be sketched as:

1: for each $r_i$ in S do:
2: compress model M by rate $r_i$ and obtain model $m_i$
3: test (execute) compressed model $m_i$
4: record inference time $t_i$ and accuracy $a_i$ of a model $m_i$
5: Define function $h(r_i) = r_i *n$
6: Utilizing data of recorded $(t_i, a_i, r_i)$:
employ minimization of mean squared error to fit linear or non-linear functions of f, and g, such that
$t_i = f(r_i)$, and $a_i = g(r_i)$
7: Define the optimization problem P as follow:
maximize $g(r_i)$ (accuracy) subject to:

$f(r_i) <$ inference time requirement from R
$h(r_i) <$ memory allocation requirement from R

8: if all $g(r_i)$, $f(r_i)$ are linear functions, solve P using linear programming, if any of $g(r_i)$, $k(r_i)$, $f(r_i)$ are non-linear functions, solve P utilizing non-linear programming, which returns the r*.
9: Compress M with optimal compression rate r*
10: Return compressed model M*, optimal compression rate r*

Accordingly, stage 1 of our method consists of 4 major steps:

First: compression of an AI model with a set of different compression rates. At first, we make the compression several time by different value of compression rate {r1, r2, ...} and save those models.
The different values might be determined (chosen) by dividing an overall range of compression range (e.g. 1.5 to 10) in a number (e.g. 10) of equidistant steps. A system engineer might input or change these parameters. However, in other embodiments the system itself may decide on the range and number of the compression rates for this step, e.g.

having a lookup-table for these parameters in which for each kind (type) of an industrial task these parameters are proposed.

There are different algorithms to compress AI models (e.g. knowledge distillation, weight quantization). Such compression is, inter alia, described in: A Survey of Model Compression and Acceleration for Deep Neural Networks; Yu Cheng, Duo Wang, Pan Zhou, Member, IEEE, and Tao Zhang, Senior Member, IEEE. We assume that a compression algorithm we utilize is chosen and fixed, so that each compression rate would only have one corresponding inference accuracy score.

Second: testing the performances of compressed models obtained at the step 1. At this step we test a performance of every compressed model. We consider two test values:

a) An AI model inference accuracy $a_i$, which can be obtained right away on the testing dataset, and
b) An inference time $t_i$, which can be performed on edge itself, or on an edge simulator, or on another device with the comparable hardware characteristics.

Third: obtain the function of f(r), g(r) and h(r). Given the collected data (r1, t1, a1) ... $(r_n, t_n, a_n)$, we fit functions of inference time and inference accuracy:

$$t_i = f(r_i),$$

$$a_i = g(r_i)$$

with a usage of minimization of mean squared error. In general case, f and g might be either linear or non-linear function depending on datapoints (typically, f and g might be approximated by linear or exponential functions). We also define function of memory space: $h(r_i) = r_i * n$. Now we can formulate our optimization problem P as following:

Maximize g(r) with respect to:

- f(r) < inference time limit requirement from R ("Requirements"), and
- h(r) < memory allocation limit requirement from R,

which is a typical linear/non-linear programming optimization problem which consists of an objective function and several inequality constraints. If f, g, h are all linear functions, it is a linear programming problem, if any of them are non-linear function, it will be non-linear programming problem. Such problems and their solution are known, see for example: Kantorovich, L. V. (1940). A new method of solving some classes of extremal problems. Doklady Akad Sci SSSR. 28: 211-214.

Fourth: solve the optimization problem P using linear (or non-linear) programming technique. Both linear/non-linear programming are well studied topics in operation research. There are several existing algorithms to solve the problem. For example, simplex method for linear programming; approximation programming, convex programming for non-linear programming. Finally, after solving P, we get the best compression rate r* for the AI model compression. Applying this optimal compression rate r*, we obtain an optimal compressed AI model for the deployment in a particular AI task under requirements R.

The method described above we generalize in the following way: performing analytical tasks with certain requirements and utilizing our method shown in Figure 1 we get the information which can be stored in a database and one can summarize it like an example in the table showed in Figure 3, which is the starting point for stage 2 of the method.

In the table we collect all the information about the AI task and deployment requirements. In the beginning our method populate this table according to a workflow described in the stage 1 and outputs an optimal compression rate r*.

After being applied to N AI tasks we can train (stage 2) an additional machine learning model with a usage of information from the table shown in Figure 3. Having such a model we can later avoid running every time expensive algorithm described in Algorithm 1 and can recommend an optimal compression rate r* for every new, but similar AI task with a usage of this machine learning model (stage 3).

Accordingly, the information of the table is fed into a machine learning model, e.g. neural network or the like. Once the machine learning model is trained, it can be employed for choosing an optimal compression rate r* for a new industrial task. This is done in a third stage (employment of the trained machine learning model), shown in the right-hand side box of Figure 1.

A description (type of the problem, type or name of the customer, power class of a machine, material type of a part etc.) of the new task, a chosen compression algorithm, memory allocation of the uncompressed AI model and Requirements (inference time limit, memory space constraints) for the execution might be suitable inputs for the machine learning system.

The machine learning system responds by a value for a suitable, optimal compression rate r*. Finally, the new AI model is compressed according to that compression rate r* and used for fulfilling the new AI task, e.g. control of an industrial device or process or prediction / scheduling of maintenance tasks. The advantage is, that based on the similarity of the AI tasks and the requirements an answer (value for an optimal compression rate r*) can be found without having at hand empirical data which matches with the new problem in an identical matter and without the obligation to do a new series of execution of the new AI task with different compression rates.

In an advantageous embodiment, also other parameters can be proposed with the trained machine learning model. For example, the best fitting compression algorithm (Weight quantization, Tensor decomposition, Knowledge Distillation, ...) can be proposed automatically for a new industrial task ("new AI task") and its new AI model.

In an advantageous embodiment, the description of the AI task can be defined using a markup language. Such is ideal for automatic evaluation in training and, later, using the machine learning model.

Comparing to known methods, this invention has better performance and efficiency. That is achieved since we perform the optimization with respect to maximum inference time required, memory allocation limit required, and maximizing inference accuracy. After the generalization of the proposed workflow one can directly choose an optimal compression rate r* and reduce the computational effort which is necessary in traditional methods when running an expensive iterative algorithm on edge devices ED or comparable hardware setup.

Known methods concentrate on tuning the hyperparameters of fixed compression algorithm in an expensive iterative manner until the requirements are met, regardless a final inference accuracy. We in opposite propose to find an optimal compression rate r* with respect to maximal inference accuracy and limited hardware resources in the stage 1, and with a stage 2 we perform a generalization over the AI tasks and additional requirements as summarized in Table of Figure 3. Utilizing this generalization (stage 3), we avoid running complex algorithms.

In the stage 1 of our proposed method, only few numbers of trials on edge or comparable hardware setup (execution environments) are required to fit functions f and g, and apply linear/non-linear programming afterward, which avoids the large number of iterative steps performed in prior work. In the stages 2 and 3, after generalization of results from stage 1 we do not need these computations anymore and can propose an optimal compression rate r* with a usage of computational inexpensive machine learning algorithm.

With this method we improve the flexibility and efficiency of deploying trained AI models on different devices, e.g. Siemens' S7-1500 TM NPU (technology module - neural processing unit) and Siemens' Industrial Edge so that the method can be scaled to various verticals that work with promising edge technologies resulting in a cost advantage in comparison to other methods. Our method allows effective deployment of a highly accurate and computational efficient AI model for customer needs within a short time period.

## Claims

1. Method for determining a compression rate r* for an AI model of an industrial task (Task 1, ..., k; Task k+1, ..., k+n) according to a set of requirements for the runtime properties of the AI model, wherein, for the AI model, the original number of parameters (n) is reduced to a reduced number of parameters (n*), **characterized in, that** in a first stage for a number of different AI models for a number of industrial tasks (Task 1, ..., k) for each of the industrial tasks (Task 1, ..., k) a number of different compression rates $r_i$ for the assigned AI model is determined, wherein in a first step each AI model is compressed with that number of different compression rates $r_i$ wherein in a second step each of the compressed AI models is executed in an execution environment, whereby as first results during the execution of each of the AI models the runtime properties are recorded, wherein in a third step an optimal compression rate r* for each of the AI models is calculated by an analytical analysis of the first results, whereby the optimal compression rate r* for each industrial task (Task 1, ..., k) together with a description of the industrial task is stored in a database, and **that** in a second stage the data from the database is used to train an additional machine learning model, the additional machine learning model having feature information about each of the industrial tasks (Task 1, ..., k) as input and the calculated optimal compression rate r* as output, and **that** in a third stage for a new AI model of a new task (Task k+1, ..., k+n) a new set of desired runtime properties is defined and the additional machine learning model is employed for determining the optimal compression rate r* for that new AI model in respect to the desired runtime properties.

2. The method of claim 1, wherein in the first step for every compression rate r* a compressed AI model is created.

3. The method of any of the preceding claims, wherein as runtime properties at least memory consumption and inference time of the executed AI model are used.

4. The method of claim 3, wherein in the third step the optimal compression rate r* is the compression rate r* with the best inference accuracy a which still fits the requirements for the runtime properties.

5. The method of any of the preceding claims, wherein in the third step for each industrial task linear or non-linear functions are fitted through the recorded runtime properties.

6.  The method of claim 5,
    wherein the function is an interpolation.

7.  The method of any of the preceding claims,
    wherein in the second and third stage the feature information for each of the industrial tasks (Task 1, ..., k; Task k+1, ..., k+n) at least comprises: information of memory allocation limit, inference time limit for the compressed model, an original AI model size of the uncompressed AI model, and used compression algorithm.

8.  The method of any of the preceding claims,
    wherein as the execution environment an industrial edge device ED is used.

9.  The method of any of the preceding claims,
    wherein in the third step the runtime properties of the uncompressed AI model and the requirements are stored together with the optimal compression rate r*.

10. The method of any of the preceding claims,
    wherein in the second step the execution environment is one of a Personal Computer, a real programmable logic controller PLC, an emulated programmable logic controller, a cloud computing service CCS, or an industrial edge device ED.

11. A system for determining a compression rate r* for an AI model of an industrial task (Task 1, ..., k; Task k+1, ..., k+n) according to a set of requirements for the runtime properties of the AI model,
    wherein, for the AI model, the original number of parameters (n) is reduced to a reduced number of parameters (n*),
    **characterized in**
    a first computer system (CS1) set up for conducting the steps of the first stage of the method according to claim 1 and for controlling the execution environment while execution of the compressed AI models,
    a second computer system (CS2) set up for performing the method steps of the second and third stage of the method according to claim 1, and
    a communication channel connecting the first and the second computer system (CS1, CS2).

12. A computer program product, comprising computer readable code, that when executed on a processor, performs any one of the method steps of one or more of the method claims 1 to 10.

FIG 1

## FIG 2

Input:
original AI model

| Model Compressed by rate $r_1$ | Model Compressed by rate $r_2$ | ... | Model Compressed by rate $r_n$ |

Input: R {space memory constraint, inference time constraint}

Test on edge device (or simulator) and record inference time $t_i$ and inference accuracy $a_i$ for every model compressed with rate $r_i$

Define space function $h(r_i)=n*r_i$, and use recorded data to fit linear (or non-linear) function $f$ (inference time) and $g$ (inference accuracy) such that: $t_i=f(r_i)$ and $a_i=g(r_i)$

Using Linear (or nonlinear) programming approach to solve the optimization problem P:
Maximize $g(r)$ subject to:
$f(r) <$ speed constraint and
$h(r) <$ memory constraint

Output: optimal compression rate: $r*$

Output: model compressed by optimal rate $r*$

# FIG 3

| AI Task | Features | | | | | Optimal compression rate (labels) |
|---|---|---|---|---|---|---|
| | Memory allocation limit [GB] | Inference time limit [ms] | Original model size [GB] | Compression algorithm used | . . . | |
| Motor failure detection at customer 1 | 3 | 100 | 5 | Weight quantization | . . . | 2 |
| Conveyor belt elongation at customer 2 | 4 | 230 | 8 | Knowledge distillation | . . . | 3 |
| Motor failure detection at customer 3 | 3 | 150 | 4 | Tensor decomposition | . . . | 1.5 |
| . . . | . . . | . . . | . . . | . . . | . . . | . . . |
| Conveyor belt elongation at customer N | 4 | 200 | 7.5 | Weight quantization | . . . | 2.5 |

## FIG 4

CS1

CS2

NW

NPU   PLC

ED

CCS

IP

Europäisches
Patentamt

European
Patent Office

Office européen
des brevets

**EUROPEAN SEARCH REPORT**

Application Number

EP 20 18 6916

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 163 341 A (ALIBABA GROUP HOLDING LTD) 23 August 2019 (2019-08-23) <br> * abstract * <br> * figures 1,2,3,4A,4B * <br> * paragraphs [0039] - [0090] * <br> ----- | 1-12 | INV. <br> G05B13/02 <br> G06N3/04 |
| A | Anubhav Ashok ET AL: "N2N Learning: Network to Network Compression via Policy Gradient Reinforcement Learning", arXiv:1709.06030v1, 17 December 2017 (2017-12-17), XP055618037, Retrieved from the Internet: URL:https://arxiv.org/abs/1709.06030v2 [retrieved on 2019-09-03] <br> * table 5 * <br> * section 4.6 * <br> ----- | 1-12 | |
| A | WO 2020/102887 A1 (TANDEMLAUNCH INC [CA]) 28 May 2020 (2020-05-28) <br> * abstract * <br> * figures 1,2,4 * <br> * paragraphs [0020] - [0046] * <br> ----- | 1-12 | TECHNICAL FIELDS SEARCHED (IPC) <br><br> G06N <br> G05B |
| A | SHIVANGI SRIVASTAVA ET AL: "Adaptive Compression-based Lifelong Learning", ARXIV.ORG, CORNELL UNIVERSITY LIBRARY, 201 OLIN LIBRARY CORNELL UNIVERSITY ITHACA, NY 14853, 23 July 2019 (2019-07-23), XP081446655, <br> * abstract * <br> * table 2 * <br> * sections 2-4 * <br> ----- | 1-12 | |

-/--

The present search report has been drawn up for all claims

| Place of search | Date of completion of the search | Examiner |
|---|---|---|
| The Hague | 18 December 2020 | Hageman, Elodie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 20 18 6916

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SICONG LIU ET AL: "On-Demand Deep Model Compression for Mobile Devices", MOBILE SYSTEMS, APPLICATIONS, AND SERVICES, ACM, 2 PENN PLAZA, SUITE 701NEW YORKNY10121-0701USA, 10 June 2018 (2018-06-10), pages 389-400, XP058411399, DOI: 10.1145/3210240.3210337 ISBN: 978-1-4503-5720-3 * abstract * * figures 1,2 * * sections 2-7 * | 1-12 | |
| A | SEUNGYEOP HAN ET AL: "MCDNN: An Approximation-Based Execution Framework for Deep Stream Processing Under Resource Constraints", MOBILE SYSTEMS, APPLICATIONS, AND SERVICES - MOBISYS'16, JUNE 25-30, 2016, SINGAPORE, SINGAPORE, ACM, US, 20 June 2016 (2016-06-20), pages 123-136, XP058259698, DOI: 10.1145/2906388.2906396 ISBN: 978-1-4503-4269-8 * abstract * * figures 1,7,9 * * sections 3-5 * | 1-12 | |

TECHNICAL FIELDS
SEARCHED (IPC)

The present search report has been drawn up for all claims

| Place of search | Date of completion of the search | Examiner |
|---|---|---|
| The Hague | 18 December 2020 | Hageman, Elodie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 18 6916

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2020

| Patent document cited in search report | | Publication date | Patent family member(s) | | Publication date |
|---|---|---|---|---|---|
| CN 110163341 | A | 23-08-2019 | CN | 110163341 A | 23-08-2019 |
| | | | WO | 2020207082 A1 | 15-10-2020 |
| WO 2020102887 | A1 | 28-05-2020 | WO | 2020102887 A1 | 28-05-2020 |
| | | | WO | 2020102888 A1 | 28-05-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YU CHENG ; DUO WANG ; PAN ZHOU.** A Survey of Model Compression and Acceleration for Deep Neural Networks. *Member, IEEE, and Tao Zhang, Senior Member, IEEE*

- **KANTOROVICH, L. V.** A new method of solving some classes of extremal problems. *Doklady Akad Sci SSSR.,* 1940, vol. 28, 211-214